# EUROPEAN PATENT APPLICATION

(11) **EP 2 511 441 A1**
(43) Date of publication of application: **17.10.2012**
(21) Application number: 10835525.6
(22) Date of filing: 10.12.2010
(51) Int. Cl.: E04C 3/09, B23K 37/04, B21F 27/20

(54) **PLANT AND METHOD FOR THE AUTOMATED PRODUCTION OF LATTICE STRUCTURES**

(30) Priority: 11.12.2009 ES 200902320
(71) Applicant: Grupo De Ingenieria Aceanica, S.L., 38390 - Santa Ursula, Tenerife - Islas Canarias (ES)
(72) Inventor: DEL CAMPO Y RUIZ DE ALMODOVAR, Cesar, 11500 El Puerto de Santa Maria (Cádiz) (ES)
(74) Representative: Garcia-Cabrerizo y del Santo, Pedro Maria
(86) International application number: PCT/ES2010/000513
(87) International publication number: WO 2011/070202

(57) **Abstract**

Plant for the automated manufacture of truss structures and the process, which includes a zone for positioning the tubes (A) according to the required geometry, a manufacturing zone made up of a zone for joining the heads of the tubes (8) and a zone for shaping and welding the transverse tubes (9), a collection station for the structures (10), a zone for the inspection and painting of the structures (12), a loading and shipping zone and an assembly zone, these latter two are situated in the exterior of the manufacturing plant. This plant enables the manufacture of truss structures of any required size and geometry, avoiding all manual manipulations, increasing quality and reducing costs.

## Description

### Technical sector

This invention is classified within the technical sector of the manufacture of metallic structures made from longitudinal tubular elements, specifically truss structures. It refers to an automated manufacture system, specially designed to reduce the consumption of materials and energy, as well as reducing manufacturing time. The automation of all the manufacturing processes improves quality, notably reduces costs and improves efficiency and sustainability.

### Background to the invention

Truss structures built from longitudinal tubular elements are common and have a wide range of uses. These structures are formed of two or more longitudinal tubular elements.

Such structures composed of two elements, whether they are parallel or converging, joined together by other, smaller elements, are often used as beams for lighting rigs or heavy loads. Those composed of three parallel longitudinal elements are also used as beams, for example in tower cranes and pillars. Those made of more than three elements, situated at the vertexes of a polygon with n sides are generally used as pillars.

In all cases they are manufactured from a small number of elements which does not justify using automated systems, so they are made manually, using the following process: the longitudinal elements are placed in the required form and fixed to a surface; the points where the pieces of lesser cross section will be joined must be traced and the exact length required for each one measured; the tubes are cut in such a way that they are perfectly tangential to the longitudinal elements, i.e. as if they are to be inserted; a bevel is made for the welding; they are fixed using provisional spot welds to the longitudinal elements and then welded in place by hand.

For smaller structures, such as for lighting rigs or carrying loads, the pieces that make up the lattice are usually curved first, then put in place and provisionally spot welded to the longitudinal elements, before then the final welding is done.

All these consecutive manual processes are very expensive and limit the use of a type of structure which, from the point of view of the design calculations, and in terms of economy of materials is very competitive. Generally truss structures built with angular elements are used instead, as they are simpler, faster and more economical to make. Nevertheless, structures made from angular elements are more sensitive to corrosion in aggressive environments, such in or near the sea, which makes them inappropriate because of the costs of protecting and maintaining them.

This invention therefore aims to describe an automated installation for the manufacture of truss structures composed of tubular elements, to resolve, in an economically viable and technically safe way, the following technical problems:
● Avoid the manual manipulation of the elements, the tracing of the structure, the placing of the component parts, their provisional fixing in place and the final welding.
● Avoid movements to the structure during the manufacturing process, which are unavoidable in traditional methods in order to do the welding in a horizontal position.
● Replace the process of cutting inserts, with the automatic and *in situ* curving of the pieces that form the truss. This notably reduces costs and waste materials.
● Replace manual TIG welding, with automated induction or high frequency welding.
● Definitively reduce costs and ensure quality.

### Description of the invention

The truss manufacturing equipment described here is composed of a series of elements that are interrelated in such a way that when they operate in a chain it creates the automated manufacture of truss structures.

Firstly, to avoid confusion, it is important to note that in the terminology used here, a truss structure, be it a beam or a pillar, is composed of parallel or converging longitudinal tubes, between which a series of tubes, which we call transverse tubes are placed in diagonal or in a saw-teeth shape.

The truss manufacturing plant is composed of a number of zones.

One of the first zones is for the positioning of the tubes. This zone bears a number of similarities with the tracks of a bridge crane, upon which there are a series of vertical pillars that are installed with a devices to support the tubes distributed up their length. The pillars can move along the tracks in order to alter the distance between them and similarly the support devices for the tubes can be raised and lowered on the pillars. The pillars and supports are placed according to the final geometry of the desired truss structure.

A totally automated bridge crane that follows the instructions of a control system, takes the tube containers and, one by one selects the longitudinal tubes that will form the truss structure. It positions these tubes parallel to the ground and perpendicular to the tracks, in the support devices. Once all of the longitudinal tubes are in place, the bridge crane begins to place the transverse tubes in the corresponding supports, so that they are placed between the longitudinal tubes, either in parallel or converging with them. Once they are placed, in exact accordance with the proposed geometry, the motorized bobbins on which the tubes are supported, are activated and the structure is moved to the manufacturing zone, maintaining its geometry. This zone is in turn divided into the zone for joining tubes at the extremes and the zone for the shaping and welding of the transverse tubes.

The structure moves to the zone for the shaping and welding of the transverse tubes. There the tubes are held in place by pillars with supports identical to those in the positioning zone but which also have hydraulic cylinders that press and compress the transverse tube bending it against the longitudinal tube where, with double induction arc welders that approach automatically, the transverse tube is welded to the longitudinal one.

This operation is repeated until more tubes are required to increase the length of the structure, which advances in the same way, the motorized bobbins located both in the positioning and manufacturing zones, are activated as the forming and welding of the transverse tubes progresses.

Once this process results in the entire length of the tubes having been used, first that of the transverse tube and then that of the longitudinal tubes, new tubes are moved from the positioning zone to the zone for joining tubes at the extremes. In this zone a new tube is taken and the extreme end or head of that tube is welded to the tube that was already in the structure in order to increase its length. This then continues to advance into the shaping and welding zone and the operation is repeated until the structure is complete.

The final structure is then moved to a collecting station. In this area there are motorized tracks but there are no longer pillars. The structure is moved sideways to the inspection and painting zone. This is a closed area where the welding is checked and the structure is painted and protected against corrosion.

When it leave the inspection and painting zone, the structure is completely finished.

It only remains to transport it to the final zone for loading and shipping or to the assembly zone.

Faced with the problems outlined in the previous section, the solution that has been developed, the protection of which is requested here, offers the following advantages with respect to exiting solutions at the current state of the art:
● It is a totally automated solution, from the selecting of of the tubes in the containers to the shaping of the transverse tubes and their welding to the longitudinal tubes.
● Separating the positioning zone from the manufacturing zones enables the tubes to be positioned in the first in the exact form required, thanks to the motorized and controlled systems of the bobbins that support them.
● Manually moving structures that may be very large and heavy with cranes is avoided. Once each longitudinal section of the structure is built, it moves along the production line, enabling the following section to be built, simply using the impulse of the motorized supports holding it. Once the structure is finished it moves along the tracks thanks to the fact that the platforms holding the supports are motorized with rack and pinion mechanisms that automatically carry it to the zone for the inspection of the welding and painting to protect it against corrosion.
● The system allows the building of flat structures composed of two parallel or converging longitudinal elements, for large lighting rigs and/or beams to carry loads; triangular structures, composed of three longitudinal elements, or more for pillars or beams; and square section structures formed by any number of longitudinal elements on each face to be used as pillars.
● It renders unnecessary both the cutting of inserts and the manual welding of these to the longitudinal tubes. It reduces costs, time and waste materials, and at the same time improves quality.
● The structures manufactured in this way are moved by the process itself, i.e. by the movement of the motorized platforms supporting the structure on tracks, from the inspection and painting zone to the zone for shipping or assembly.

### Description of the diagrams

To complete the description offered here and with a view to assisting understanding of the characteristics of the invention, a set of diagrams are attached, which are be illustrative but not limiting, showing the following:
Figure 1: Floor plan of the full manufacturing equipment
Figure 2: Profile of the bridge crane
Figure 3: Elevation of one track with five pillars
Figure 4: Detail of a pillar
Figure 5: Detail of the process for curving the transverse tubes

Below is a list of the references used in the figures:
(1) bridge crane tracks
(2) Container for longitudinal tubes
(2') Container for transverse tubes
(2") Container for piles
(3) Parallel tracks fixed to the floor, on which the pillars are situated
(4) Pillars
(5) Bobbins on the tracks
(6) Large bobbins for supporting the longitudinal tubes (6') Small bobbins for supporting the transverse tubes
(7) Double cantilever
(8) Zone for joining tubes at the extremes
(9) Zone for the shaping and welding of the transverse tubes
(10) Collecting station
(11) Motorized bobbins
(12) Inspection and painting zone
(13) Motorized moving platforms
(14) Bridge crane trolly
(15) Bridge crane trolly magnet
(16) Longitudinal tube
(17) Transverse tube
(18) Telescoping hydraulic pistons
(19) Vertical axis bobbins

### Detailed description of the invention

To help understand the invention better, what follows is a description, based on the figures provided, of the automated equipment for the manufacture of truss structures that is the aim of this invention.

This equipment is composed of a set of machines that can be automated and which interrelate to achieve the aim of automating the entire manufacturing process, from the selection of the materials to the finished product leaving the production line.

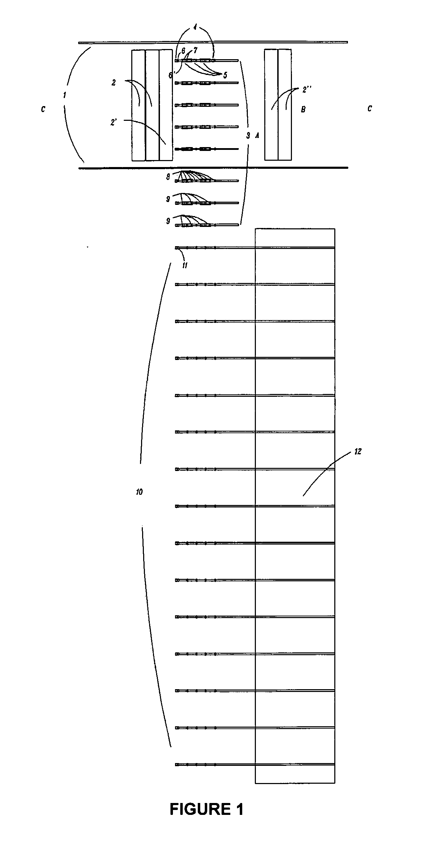

Figure 1 represents an automated plant for the manufacture of truss structures of any shape or size.

The containers (2) which contain the longitudinal tubes (16) and the containers (2') which contain the tubes that make up the transverse structure (17) arrive at the production plant, via a system of pneumatic supports or omnidirectional rollers. At the opposite end of the plant (B) are the containers (2") which contain the tubes and parts for the manufacture of piles, which are the object of another invention.

All the containers (2, 2', 2") are centrally placed in relation to the tracks (1). These tracks (1) are part of a first bridge crane used to place the tubes (16, 17) for the structure and a second bridge crane, used to place the piles inside the truss pillars. Both bridge cranes are the same, in order to ensure that a fault with one does not paralyze the production process. Both bridge cranes have a parking space in the exterior (C), outside of the positioning zone (A).

In the best mode contemplated, these have a minimum clearance space of 12m. under the magnets and a useable unit load capacity of 4000 Kg. They will have three trollies (14) that can move along the bridge and each trolly has a magnet (15) for picking up the tubes, two of them will hold the tube at the extremes and the third in the center. The magnets at the two extremes will have a safety system that is introduced inside the tubes so that, in the case of a failure in the magnetic support system, under no circumstances will the tubes fall. The bridge crane will have a minimum span of 16 m. A computer controlled system receives the static calculations that define the geometry of the truss structure to be built and activates the bridge crane.

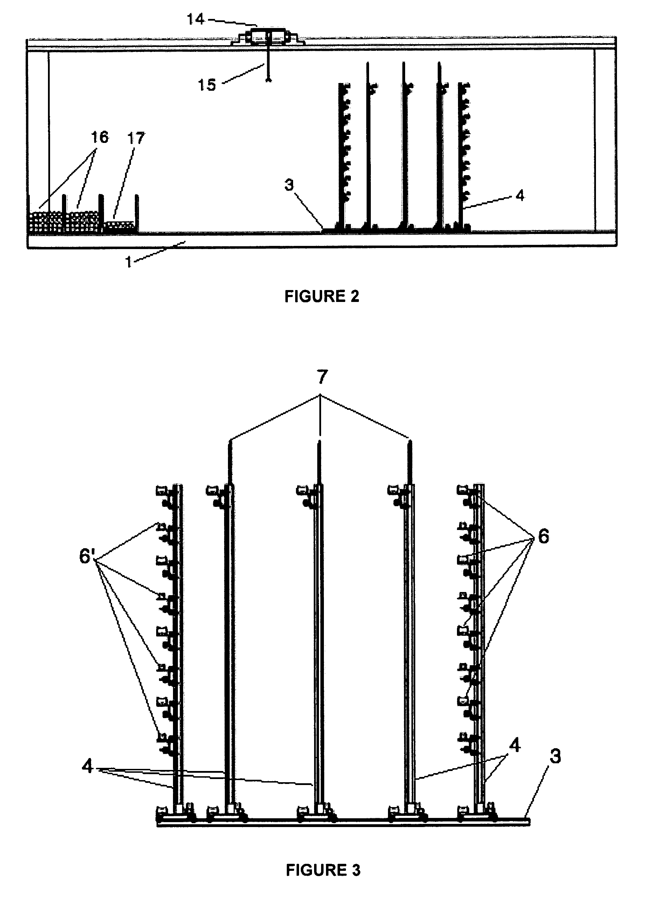

As can be seen in figure 2, the bridge crane takes a longitudinal tube (16) which is located horizontally in the container (2) and it carries it, maintaining the horizontal position ("lying down"), to the positioning area, which is consists of a series of pillars (4). As you can see in figure 3, these pillars (4) can move along the length of their roller tracks (3) and in the best mode contemplated there would be five of these tracks.

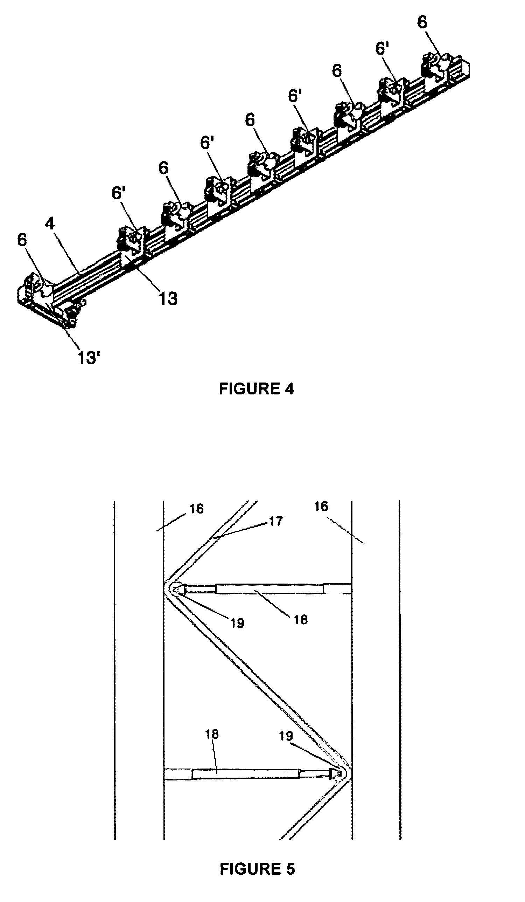

In figure 4 it can be observed that on each of these pillars (4) there are a number of motorized platforms (13) that can move up and down the pillars (4). On these platforms (13) there are large bobbins (6) on which the longitudinal tubes are supported.

Thanks to the moveable platforms (13) and the roller tracks (3), both the pillars (4) and the bobbins (6) can be moved to the precise distance required for placing the longitudinal tubes.

Once the first tube is in place, the bridge crane continues the operation until all the longitudinal tubes are in place.

Once all these are in place, the bridge crane takes the transverse tubes (17) from container (2') and it places them on the small bobbins (6') located on the movable platforms (13) on the pillars (4). A structure of this kind is a polygon, the faces of which are formed by a number of longitudinal tubes, joined together by transverse tubes of a smaller cross section, with no tubes (neither longitudinal nor transverse) in the interior of the structure. The interior pillars that support the top face only have bobbins at floor level, for the lower face and on the opposing upper face, as observed in figure 3. Once all the transverse tubes are in place at the base and on the sides of the structure, telescoping brackets (7) located on movable platforms placed vertically on the pillars fold down through 90° or they expand in order to place more bobbins (6') in the required position for the placing of the transverse tubes of the upper face.

The bridge crane places these last tubes and finishes the placing of all the elements of the structure, which are precisely located according to the required geometry.

The system thus conceived, allows structures of any number of longitudinal elements to be manufactured, simply putting the necessary number of pillars (4) and bobbins (6, 6') for the dimensions, and moving the pillars (4) on the tracks on the floor (3) and the bobbins (6, 6') on their platforms (13) on the pillars (4), all activated by motors and rack and pinion systems, automated by the control system.

The pillars (4) are placed on platforms (13') from below with articulations activated by mechanical rotary actuators that enable to pillar to stand at a variable angle, thus making possible the creation of flat plane, triangular or square geometries.

The pillars (4) are made of individual elements joined together to adapt their height to the required dimensions in each case.

Returning to figure 1 it can be seen that once all the tubes are placed in the motorized bobbins, they are all moved from the positioning zone to the manufacturing zone (8, 9). This zone is divided into the zone for joining tubes at the extremes (8) which will be described further on in the text, and the zone for the shaping and welding of the transverse tubes (9).

The zone for the shaping and welding of the transverse tubes (9), is made up of a set of tracks (3) with pillars (4) just like those in the positioning area except that the pillars (4) in the zone for the shaping and welding of the transverse tubes (9), as can be observed in figure 5, have hydraulic telescopic pistons (18) and vertical axis bobbins (19), that push and compress the transverse tube (17) bending it against the longitudinal tube (16), where it is welded in place by double induction arc welders that approach automatically, fixing the transverse tube (17) to the longitudinal one (16). The operating procedure will be the following: in the zone for the shaping and welding of the transverse tubes (9) the transverse tubes (17) arrive, placed between and parallel to the longitudinal tubes (16). Two hydraulic pistons (18) push the transverse tube (17) located between two longitudinal tubes (16) bending it, until the transverse tube (17) butts against the corresponding longitudinal tube (16), so that the transverse tube (17) is in diagonal and resting on the longitudinal tube (16) at the required angle. Then the double induction arc welders approach and weld the contact points.

Once a transverse tube (17) is welded, the hydraulic piston (18) maintains the pressure for the programmed cooling time, and then retracts and lowers, to allow the welded structure to advance.

This operation is repeated until the transverse tubes (17) have run out (if they are placed in diagonal, they will run out before the lattice between the longitudinal tubes (16) is completed). At this point, the bridge crane selects new transverse tubes (17) and places them in the positioning zone. Then the motorized bobbins push them to the zone for joining tubes at the extremes (8), which will be where the tubes are joined longitudinally. In this zone (8) there is a track with pillars (4) which have a clamp to hold the end of the transverse tube (17) in the installed structure and another clamp to hold the new tube, they are pressed together and the arc welder approaches and completes the welding.

This operation is repeated at the ends of all the longitudinal tubes (16) that need to be extended.

The lengthened structure continues to advance towards the welding zone (9) and the new transverse tube (17) is shaped and welded in place. As it is finished, it leaves the manufacturing zone (9) and passes to the collecting station (10).

As can be seen in figure 1, the collecting station (10) consists of a set of parallel tracks (without pillars), provided with motorized bobbins (11), to advance the structure in a lengthways direction. They also have rack and pinion type transmission elements for the sideways movement of the entire structure. The structure, which is now completed, is moved through this collecting station (10) to the inspection and painting zone (12). The inspection and painting zone (12) is a closed and protected area where the inspection of the welding is carried out, and the structure is painted and protected against corrosion. Once painted and finished, the structure is taken outside to the loading and shipping or assembly zones (not shown).

Once one structure is completed, the process is repeated for the next one.

This system is specifically designed for the construction of truss structures, nevertheless, we do not rule out its extension to other fields of industry requiring similar specifications.

## Claims

1. Plant for the automated manufacture of truss structures that includes a zone for placing the tubes (A) according to the required geometry, a manufacturing zone comprising of a zone for joining tubes at the extremes (8), a zone for shaping and welding the transverse tubes (9), a collection station for the structures (10), an inspection and painting zone (12), a loading and shipping zone and an assembly zone, these latter two situated in the exterior of the factory. The zone for the positioning of the tubes (A) includes a bridge crane and a series of tracks (3) parallel to the tracks of the bridge crane (1), on which pillars (4) are vertically placed, containing devices (6, 6') to support the tubes, arranged along the length of the pillar (4). The pillars (4) themselves can move along the tracks (3) to alter the distance between them, and the devices to support the tubes (6, 6') can move up and down the length of the pillars (4) for the same reason.

2. Plant for the automated manufacture of truss structures as described in claim 1, **characterized in that** the bridge crane has three trollies (14) that can move along the bridge and each of the trollies has a magnet (15) to pick up the tubes, two of them will hold the tube at the extremes and the third in the center, and the magnets at the extremes will have a security system consisting of an axis that is introduced inside the tubes so that, in the case of a failure in the magnetic support system, under no circumstances will the tubes fall.

3. Plant for the automated manufacture of truss structures as described in claim 1 **characterized in that** the devices for the support of the tubes (6, 6') are bobbins.

4. Plant for the automated manufacture of truss structures as described in claim 1 **characterized in that** the pillars (4) are placed on platforms (13') with articulations activated by mechanical rotary actuators that allow a variable angle and thus enable the creation of flat plane, triangular or square geometries.

5. Plant for the automated manufacture of truss structures as described in claim 1 **characterized in that** the pillars (4) are constructed from individual components joined together, so that the height can be adapted to requirements in each case.

6. Plant for the automated manufacture of truss structures as described in claim 1 **characterized in that** the zone for joining tubes at the extremes (8) has tracks with pillars with clamps installed to hold the tubes that are going to be soldered together lengthways.

7. Plant for the automated manufacture of truss structures as described in claim 1 **characterized in that** the zone for shaping and welding the transverse tubes (9) includes a series of tracks with pillars similar to those in the positioning zone, and which also have hydraulic cylinders (18) to bend the transverse tubes (17) in diagonal between the longitudinal tubes (16) and an arc welder to weld them once they are in place.

8. Plant for the automated manufacture of truss structures as described in claim 1 **characterized in that** the collecting station (10) stores the structures coming out of the zone for shaping and welding (9) and consists of a set of parallel tracks with motorized devices (11) to move the structures lengthways and rack and pinion type transmission elements, to move the entire structure sideways.

9. Plant for the automated manufacture of truss structures as described in claim 1 **characterized in that** the inspection and painting zone (12) is a closed and protected space where there is equipment to inspect the welding and for painting and protecting the structure against corrosion.

10. Plant for the automated manufacture of truss structures as described in the claims above, **characterized in that** it includes the following operations:
● Moving the containers (2) that contain the longitudinal tubes and the containers (2') that contain the tubes to form the transverse structure, using a system of pneumatic supports or omnidirectional rollers;
● a computer controlled system receives the static calculations defining the geometry of the truss structure to be manufactured and activates a bridge crane;
● the bridge crane takes a longitudinal tube (16) that is lying horizontally in the container (2) and it takes it, maintaining the horizontal position, to the positioning area where it is positioned on bobbin-style supports (6) located on movable platforms (13) on the pillars (4);
● once the first tube is in place, the bridge crane continues the operation until all the longitudinal tubes (16) are in place;
● once these are in place, the bridge crane takes the transverse tubes (17) from the container (2') and it places them on the smaller bobbins (6') located on movable platforms (13) on the pillars (4);
● once the transverse tubes (17) are in place for the base and the sides of the structure, telescopic brackets (7) located on movable platforms placed vertically on the pillars fold down 90° or they expand, placing bobbins (6') into the position required for the placing of the transverse tubes (17) on the upper face;
● once all the tubes are placed in accordance with the geometry of the project, the structure is moved from the positioning zone to the zone for the shaping and welding of the transverse tubes (9) where hydraulic pistons (18) push the transverse tube (17) located between the two longitudinal tubes (16), bending it until the transverse tube (17) butts against the corresponding longitudinal tube (16), so that the transverse tube (17) is pressed against the longitudinal tube (16) at the required angle;
● then some double induction arc welders approach and weld both tubes, The hydraulic piston (18) maintains the pressure for the programed cooling time, and then retracts and lowers the piston (18) to allow the structure to move forward;
● this operation is repeated the full length of the transverse tube (17);
● at this point, the bridge crane takes new tubes and places them in the positioning zone, and the motorized bobbins push them to the zone for joining tubes at the extremes (8) where a clamp holds the ends of the tube in the welded structure and another clamp holds the new tube, they are pressed together and an arc welder approaches to weld them together;
● the extended structure continues to advance into the zone for the shaping and welding of the extended tube. As it is finished it leaves the manufacturing area (9) and passes to the collection station (10);
● in the collection station (10) the finished structures with the programed length and geometry are transferred from the collection station (10) to the inspection and painting zone (12);
● in the inspection and painting zone (12) the welding is inspected and the structure is painted and protected against corrosion;
● the completely finished structure is then taken outside to the loading and shipping zone or to the assembly zone.

## Amended claims

### Amended claims under Art. 19.1 PCT

**1.** Plant for the automated manufacture of truss structures of those consisting of a zone for placing the tubes (A) according to the required geometry, a manufacturing zone comprising of a zone for joining tubes at the extremes (8), a zone for shaping and welding the transverse tubes (9), a collection station for the structures (10), an inspection and painting zone (12), a loading and shipping zone and an assembly zone, these latter two situated in the exterior of the factory, **characterized by** the fact that the zone for the positioning of the tubes (A) comprises a bridge crane and a series of tracks (3) parallel to the tracks of the bridge crane (1), on which pillars (4) are vertically placed, containing devices (6, 6') to support the tubes, arranged along the length of the pillar (4). The pillars (4) themselves can move along the tracks (3) to alter the distance between them, and the devices to support the tubes (6, 6') can move up and down the length of the pillars (4) for the same reason, said pillars (4) comprising telescopic brackets (7) foldable to 90°, located on movable platforms placed vertically on the pillars (4) and wherein the zone for shaping and welding the transverse tubes (9) comprises a series of tracks with pillars similar to those in the positioning zone, which also have hydraulic cylinders (18) to bend the transverse tubes (17) in diagonal between the longitudinal tubes (16) and an arc welder to weld them once they are in place.

**2.** Plant for the automated manufacture of truss structures as described in claim 1, **characterized in that** the bridge crane has three trollies (14) that can move along the bridge and each of the trollies has a magnet (15) to pick up the tubes, two of them will hold the tube at the extremes and the third in the center, and the magnets at the extremes will have a security system consisting of an axis that is introduced inside the tubes so that, in the case of a failure in the magnetic support system, under no circumstances will the tubes fall.

**3.** Plant for the automated manufacture of truss structures as described in claim 1 **characterized in that** the devices for the support of the tubes (6, 6') are bobbins.

**4.** Plant for the automated manufacture of truss structures as described in claim 1 **characterized in that** the pillars (4) are placed on platforms (13') with articulations activated by mechanical rotary actuators that allow a variable angle and thus enable the creation of flat plane, triangular or square geometries.

**5.** Plant for the automated manufacture of truss structures as described in claim 4 **characterized in that** the pillars (4) are constructed from individual components joined together, so that the height can be adapted to requirements in each case.

**6.** Plant for the automated manufacture of truss structures as described in claim 1 **characterized in that** the zone for joining tubes at the extremes (8) has tracks with pillars with clamps installed to hold the tubes that are going to be soldered together lengthways.

**7.** Plant for the automated manufacture of truss structures as described in claim 1 **characterized in that** the collecting station (10) stores the structures coming out of the zone for shaping and welding (9) and consists of a set of parallel tracks with motorized devices (11) to move the structures lengthways and rack and pinion type transmission elements, to move the entire structure sideways.

**8.** Plant for the automated manufacture of truss structures as described in claim 1 **characterized in that** the inspection and painting zone (12) is a closed and protected space where there is equipment to inspect the welding and for painting and protecting the structure against corrosion.

**9.** Plant for the automated manufacture of truss structures as described in the claims above, **characterized in that** it includes the following operations:
● Moving the containers (2) that contain the longitudinal tubes and the containers (2') that contain the tubes to form the transverse structure, using a system of pneumatic supports or omnidirectional rollers;
● a computer controlled system receives the static calculations defining the geometry of the truss structure to be manufactured and activates a bridge crane;
● the bridge crane takes a longitudinal tube (16) that is lying horizontally in the container (2) and it takes it, maintaining the horizontal position, to the positioning area where it is positioned on bobbin-style supports (6) located on movable platforms (13) on the pillars (4);
● once the first tube is in place, the bridge crane continues the operation until all the longitudinal tubes (16) are in place;
● once these are in place, the bridge crane takes the transverse tubes (17) from the container (2') and it places them on the smaller bobbins (6') located on movable platforms (13) on the pillars (4);
● once the transverse tubes (17) are in place for the base and the sides of the structure, telescopic brackets (7) located on movable platforms placed vertically on the pillars fold down 90° or they expand, placing bobbins (6') into the position required for the placing of the transverse tubes (17) on the upper face;
● once all the tubes are placed in accordance with the geometry of the project, the structure is moved from the positioning zone to the zone for the shaping and welding of the transverse tubes (9) where hydraulic pistons (18) push the transverse tube (17) located between the two longitudinal tubes (16), bending it until the transverse tube (17) butts against the corresponding longitudinal tube (16), so that the transverse tube (17) is pressed against the longitudinal tube (16) at the required angle;
● then some double induction arc welders approach and weld both tubes, The hydraulic piston (18) maintains the pressure for the programed cooling time, and then retracts and lowers the piston (18) to allow the structure to move forward;
● this operation is repeated the full length of the transverse tube (17);
● at this point, the bridge crane takes new tubes and places them in the positioning zone, and the motorized bobbins push them to the zone for joining tubes at the extremes (8) where a clamp holds the ends of the tube in the welded structure and another clamp holds the new tube, they are pressed together and an arc welder approaches to weld them together;
● the extended structure continues to advance into the zone for the shaping and welding of the extended tube. As it is finished it leaves the manufacturing area (9) and passes to the collection station (10);
● in the collection station (10) the finished structures with the programed length and geometry are transferred from the collection station (10) to the inspection and painting zone (12);
● in the inspection and painting zone (12) the welding is inspected and the structure is painted and protected against corrosion; the completely finished structure is then taken outside to the loading and shipping zone or to the assembly zone.

Statement under Art. 19.1 PCT
The following amendments have been made to the claims:
● Claim 1 has been amended in order to include in its preamble the zones that make up the plant, in the consideration that they could be deducted from the prior art. Characteristics not found in the prior art have been included in its characterizing part, such as those referring to the brackets, as indicated in the description, page 7, lines 20-23 and the characteristics that appeared in initial claim 7.
● Consequently, initial claim 7 has been removed.
